# EUROPEAN PATENT APPLICATION

(11) **EP 4 815 539 A1**
(43) Date of publication of application: **30.09.2026**
(21) Application number: 23959079.7
(22) Date of filing: 20.11.2023
(51) Int. Cl.: H04W 24/02

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: GAO, Ning, Dongguan, Guangdong 523860 (CN); LUO, Chaoming, Dongguan, Guangdong 523860 (CN); LU, Liuming, Dongguan, Guangdong 523860 (CN); LI, Yapu, Dongguan, Guangdong 523860 (CN)
(74) Representative: RGTH
(86) International application number: PCT/CN2023/132586
(87) International publication number: WO 2025/107101

(57) **Abstract**

Provided are a wireless communication method and a communication device. The method comprises: a first device sends first information to a second device, wherein the first information is information used for indicating a first time period, and the first time period is related to a behavior of the first device and/or the second device switching from a first channel to a second channel. The switching from the first channel to the second channel can be indicated in advance by indicating the first time period. In other words, after at least the first time period following the first information, the first device and the second device can perform channel switching. Therefore, according to the present application, before a channel enters a busy state, the first information can be sent in advance, thereby avoiding indication information sending failure caused by the busy channel.

## Description

### TECHNICAL FIELD

The present application relates to the field of communication technology, and more specifically, to a wireless communication method and a communications device.

### BACKGROUND

When a channel state of a first channel is busy, a transmitter and a receiver can switch to a second channel for communication. For example, the first channel may be a primary channel, and the second channel may be a secondary channel. In some cases, the transmitter and the receiver have different views on the channel state of the first channel, causing the transmitter and the receiver to use different channels, thereby affecting data transmission.

### SUMMARY

The present application provides a wireless communication method and a communications device. Various aspects involved in the present application are introduced below.

In a first aspect, a communication method, i.e., a wireless communication method, is provided, the method comprising: sending, by a first device, first information to a second device; wherein the first information is used to indicate information of a first time period, and the first time period is related to a behavior of the first device and/or the second device switching from a first channel to a second channel.

In a second aspect, a wireless communication method is provided, the method comprising: receiving, by a second device, first information sent by a first device; wherein the first information is used to indicate information of a first time period, and the first time period is related to a behavior of the first device and/or the second device switching from a first channel to a second channel.

In a third aspect, a communications device is provided, the communications device being a first device, the communications device comprising: a first device transmitting unit, configured to send first information to a second device; wherein the first information is used to indicate information of a first time period, and the first time period is related to a behavior of the first device and/or the second device switching from a first channel to a second channel.

In a fourth aspect, a communications device is provided, the communications device being a second device, the communications device comprising: a receiving unit, configured to receive first information sent by a first device; wherein the first information is used to indicate information of a first time period, and the first time period is related to a behavior of the first device and/or the second device switching from a first channel to a second channel.

In a fifth aspect, a communications device is provided, comprising a processor and a memory, the memory being configured to store one or more computer programs, the processor being configured to invoke the computer program in the memory to cause the communications device to perform part or all of the steps of the methods in the various aspects described above.

In a sixth aspect, an embodiment of the present application provides a communications system, the system comprising the above-mentioned communications device. In another possible design, the system may further include other devices that interact with the communications device in the solution provided by the embodiment of the present application.

In a seventh aspect, an embodiment of the present application provides a computer-readable storage medium, the computer-readable storage medium storing a computer program, the computer program causing a communications device to perform part or all of the steps of the methods in the various aspects described above.

In an eighth aspect, an embodiment of the present application provides a computer program product, wherein the computer program product comprises a non-transitory computer-readable storage medium storing a computer program, the computer program being operable to cause a communications device to perform part or all of the steps of the methods in the various aspects described above. In some implementations, the computer program product may be a software installation package.

In a ninth aspect, an embodiment of the present application provides a chip, the chip comprising a memory and a processor, the processor being capable of invoking and running a computer program from the memory to implement part or all of the steps described in the methods of the various aspects described above.

By indicating the first time period, the switch from the first channel to the second channel can be indicated in advance. That is, the first device and the second device can perform the channel switch only after at least the first time period following the first information. Therefore, the present application can send the first information in advance before the channel state becomes busy, thereby avoiding failure in sending the indication information due to a busy channel.

### BRIEF DESCRIPTION OF DRAWINGS

FIG. 1 is a schematic diagram of a wireless communications system to which an embodiment of the present application is applied.
FIG. 2 is an example diagram of a secondary channel access procedure.
FIG. 3A is an example diagram of an interference scenario.
FIG. 3B is an example diagram of another interference scenario.
FIG. 4 is an example diagram of a dynamic subband operation procedure.
FIG. 5A is an example diagram of a medium access control (MAC) frame.
FIG. 5B is an example diagram of a format of an A-control field.
FIG. 5C is an example diagram of a format of a control subfield.
FIG. 6 is a schematic flowchart of a wireless communication method provided by an embodiment of the present application.
FIG. 7 is an example diagram of a format of an A-control field provided by an embodiment of the present application.
FIG. 8 is a schematic diagram of a communication procedure provided by Embodiment 1.
FIG. 9 is a schematic diagram of a communication procedure provided by Embodiment 2.
FIG. 10 is a schematic diagram of a communication procedure provided by Embodiment 3.
FIG. 11 is a schematic diagram of a communication procedure provided by Embodiment 4.
FIG. 12 is a schematic diagram of a communication procedure provided by Embodiment 5.
FIG. 13 is a schematic structural diagram of a communications device provided by an embodiment of the present application.
FIG. 14 is a schematic structural diagram of another communications device provided by an embodiment of the present application.
FIG. 15 is a schematic structural diagram of an apparatus for communication provided by an embodiment of the present application.

### DESCRIPTION OF EMBODIMENTS

The technical solutions in the present application will be described below with reference to the accompanying drawings.

### Communications system

The technical solutions of the embodiments of the present application can be applied to various communication systems, such as wireless local area networks (WLAN), wireless fidelity (WiFi) networks, high performance radio local area networks (HIPELAN), wide area networks (WAN), cellular networks, or other communication systems. For another example, the technical solutions provided by the embodiments of the present application can be applied to communication systems adopting the 802.11 standard. Exemplarily, the 802.11 standard includes but is not limited to: the 802.11ax standard, the 802.11be standard, the next-generation 802.11 standard, etc.

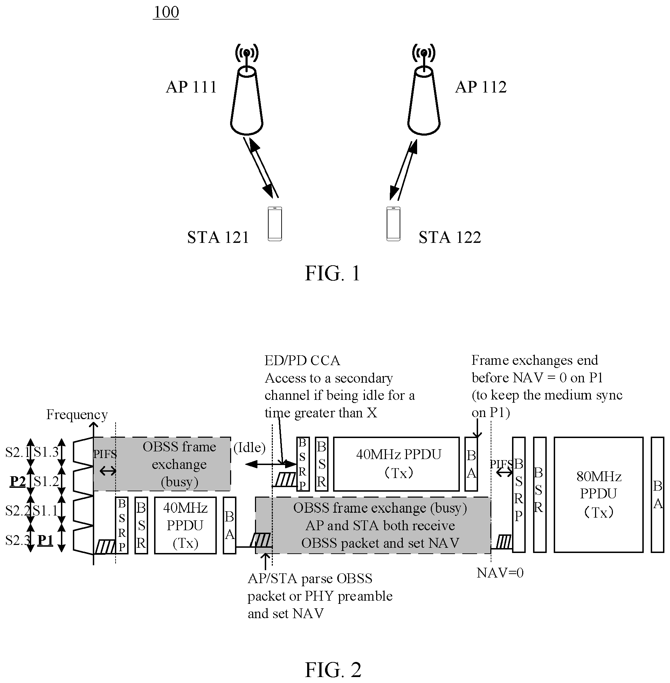

FIG. 1 shows a schematic diagram of a communication system to which an embodiment of the present application is applicable. Referring to FIG. 1, communication devices in a communication system 100 may include an access point (AP) 111, an AP 112, and a station (STA) 121 and an STA 122, wherein the STA 121 can access the network via the AP 111, and the STA 122 can access the network via the AP 112.

In some implementations, an STA may establish association relationships with one or more APs, and then communication can be performed between the STA and the APs having the association relationships. Referring to FIG. 1, communication can be performed between AP 111 and STA 121 after establishing an association relationship, and communication can be performed between AP 112 and STA 122 after establishing an association relationship.

In some implementations, communication in the communication system 100 can be communication between an AP and a non-AP STA, communication between a non-AP STA and a non-AP STA, or communication between an STA and a peer STA, wherein the peer STA may refer to a device communicating with the STA, for example, the peer STA may be an AP or a non-AP STA.

It should be understood that FIG. 1 exemplarily shows two AP STAs and two non-AP STAs, and the communication system 100 may also include a greater number of AP STAs, or the communication system 100 may include other numbers of non-AP STAs, which is not limited in the embodiments of the present application.

In addition, the above communication system can be applied to scenarios of multi-device cooperation, such as multi-AP (multiple access points, Multi-AP) cooperation, or multistation cooperation scenarios.

In the embodiments of the present application, the names of the AP and/or STA are not limited. In some scenarios, an AP can also be called an AP STA, meaning that in a sense, an AP is also a type of STA. In other scenarios, an STA can also be called a non-AP STA.

In some scenarios, the above communications device may also be a "multi-link device (MLD)", i.e., a device capable of communicating via multiple communication links, wherein the multiple communication links may include communication links of different frequency bands, for example, may include a millimeter-wave frequency band and/or a low-frequency band. Generally, if the multi-link device is an AP, the AP may also be called a "multi-link AP". If the multi-link device is an STA, the STA may also be called a "multi-link STA".

In the embodiments of the present application, an AP may be a device in a wireless network. An AP may be a communication entity such as a communication server, router, switch, bridge, or the AP device may include various forms of macro base stations, micro base stations, relay stations, etc. Of course, the AP may also be a chip, circuit, or processing system in these various forms of devices, to implement the methods and functions of the embodiments of the present application. The AP device can be applied in various scenarios, such as sensor nodes in a smart city (e.g., a smart water meter, smart meter, or smart air detection node), smart devices in a smart home (e.g., a smart camera, projector, display screen, television, audio system, refrigerator, or washing machine), nodes in the internet of things, entertainment terminals (e.g., wearable devices such as AR, VR), smart devices in a smart office (e.g., a printer, or projector), vehicle-to-everything devices in a vehicle-to-everything system, and some infrastructure in daily life scenarios (e.g., vending machines, self-service navigation stations in supermarkets, self-checkout devices, self-service ordering machines), etc.

In some implementations, the role of an STA in a communication system may not be fixed. in some scenarios, an STA can act as an AP. For example, in a scenario where a mobile phone connects to a router, the mobile phone can be a non-AP STA, while in a scenario where the mobile phone serves as a hotspot for other mobile phones, the mobile phone acts as an AP.

In the embodiments of the present application, the STA device in the embodiments of the present application may be a device with wireless transceiving capabilities, for example, it may support the 802.11 series of protocols and can communicate with an AP or other STAs. For example, an STA is any user communication device that allows a user to communicate with an AP and thereby communicate with a WLAN. Examples of STA devices include: user equipment (UE), a mobile station (MS), a mobile terminal (MT), an access terminal, a subscriber unit, a subscriber station, a mobile station, a mobile unit, a remote station, a remote terminal, a mobile device, a user terminal, a terminal, a wireless communication device, a user agent, or a user apparatus, etc.

The STA in the embodiments of the present application may also be a device that provides voice/data connectivity to a user, for example, a handheld device with wireless connectivity, a vehicle-mounted device, such as a mobile phone, a tablet computer, laptop computer, a palmtop computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, a cellular phone, a cordless phone, a session initiation protocol (SIP) phone, a wireless local loop (WLL) station, a personal digital assistant (PDA), a handheld device with wireless communication function, a computing device or other processing device connected to a wireless modem, vehicle-mounted device, wearable device, terminal device in a 5G network, or terminal device in a future evolved public land mobile network (PLMN), etc., which is not limited in the embodiments of the present application.

By way of example and not limitation, in the embodiments of the present application, the STA device may also be a wearable device. A wearable device can also be called a wearable smart device, which is a general term for devices that are developed by applying wearable technology and intelligent design on daily wear, such as glasses, gloves, watches, clothing, and shoes. Examples include: smart watches or smart glasses, etc., as well as devices that focus on a single type of application function and need to be used in conjunction with other devices, such as smartphones, such as various smart bracelets and smart jewelry for monitoring vital signs.

Furthermore, in the embodiments of the present application, the STA device may also be a terminal device in an internet of things (IoT) system. IoT is an important part of future information technology development, and its main technical feature is to connect objects to the network through communication technology, thereby realizing an intelligent network of human-machine interconnection and thing-thing interconnection. In the embodiments of the present application, IoT technology can achieve massive connections, deep coverage, and terminal power saving through, for example, narrow band (NB) technology.

Furthermore, in the embodiments of the present application, the STA device may be a device in a vehicle-to-everything system. The communication methods in the vehicle-to-everything system are collectively referred to as V2X (X represents anything). For example, the V2X communication includes: vehicle to vehicle (V2V) communication, vehicle to infrastructure (V2I) communication, vehicle to pedestrian (V2P) communication, or vehicle to network (V2N) communication, etc.

Furthermore, in the embodiments of the present application, the STA device may also include sensors such as smart printers, train detectors, gas stations, etc., whose main functions include collecting data (part of the terminal devices), receiving control information and downlink data from the AP device, and transmitting electromagnetic waves to send data to the AP device.

In addition, the AP device in the embodiments of the present application may be a device for communicating with an STA device, and the AP device may be a network device in a wireless local area network, and the AP device may be used to communicate with the STA device via the wireless local area network.

From the perspective of the communication standard supported by the AP, in some implementations, the AP may be a device supporting the 802.11be standard. The AP may also be a device supporting various current and future WLAN standards of the 802.11 family, such as 802.11ax, 802.11ac, 802.11n, 802.11g, 802.11b, and 802.11a.

From the perspective of the communication standard supported by the STA, in some implementations, the non-AP STA may support the 802.11be standard. The non-AP STA may also support various current and future wireless local area networks (WLAN) standards of the 802.11 family, such as 802.11ax, 802.11ac, 802.11n, 802.11g, 802.11b, and 802.11a.

In the embodiments of the present application, the frequency bands that WLAN technology can support are not limited. In some implementations, the frequency bands that WLAN technology can support may include but are not limited to: low-frequency bands (e.g., 2.4GHz, 5GHz, 6GHz), or high-frequency bands (e.g., 45GHz, 60GHz).

It should be understood that the specific forms of the STA device and the AP device are not particularly limited in the embodiments of the present application, and the above descriptions are merely exemplary.

### Secondary Channel Access

A channel may be a primary channel or a secondary channel (or referred to as a non-primary channel, auxiliary channel, or secondary channel). A communications device can determine whether to access the secondary channel based on the channel state of the primary channel. For example, when the channel state of the primary channel is idle, the device can communicate on the primary channel. For another example, when the channel state of the primary channel is busy, the device can switch to the secondary channel for communication.

It should be noted that the channel state being busy may be because the channel is interfered by an interference signal. The interference signal may include, for example, an overlapping basic service set (OBSS) signal and/or a preemption signal. The interference signal may be a WiFi signal or other signals. Other signals may include, for example, one or more of the following: microwave oven leakage radiation, radar signals, NR-U signals, etc.

As shown in FIG. 2, in the frequency domain, an 80 MHz channel bandwidth may be divided into one 20 MHz primary channel and three 20 MHz secondary channels. There may be multiple ways to divide the channel bandwidth into primary and secondary channels. For the 1^{st} primary channel, the secondary channel may be a 2^{nd} primary channel. In FIG. 2, the 1^{st} primary channel is denoted by P1, and the secondary channels corresponding to P1 are denoted by S1.1, S1.2, and S1.3, respectively. The 2^{nd} primary channel is denoted by P2, and the secondary channels corresponding to P2 are denoted by S2.1, S2.2, and S2.3, respectively.

The behavior of a transmitter (e.g., AP) and a receiver (e.g., non-AP STA) during a secondary channel access procedure is described in detail below.

The transmitter may monitor whether the 2^{nd} primary channel is idle or busy. The transmitter may monitor via energy detection/packet detection (ED/PD) clear channel assessment (CCA). For example, the transmitter may perform short training field (STF) detection.

If the 1^{st} primary channel is busy for a network allocation vector (NAV) duration and the 2^{nd} primary channel is idle for a duration X, the transmitter may perform a first operation. Here, X is a positive integer. Exemplarily, the value of X may satisfy: greater than the point coordination function interframe space (PIFS) and less than the maximum physical layer protocol data unit (PPDU) length (maxPPDU).

The first operation may include: on the 2^{nd} primary channel, the transmitter performs backoff and initiate a transmission opportunity (TXOP) request to the receiver using a buffer status report poll (BSRP) trigger frame or a request to send (RTS) frame (control frame).

It should be noted that the transmitter needs to know whether the receiver is on the 2^{nd} primary channel through RTS frame/clear to send (CTS) frame or BSRP/BSR type control frame exchange.

It should be noted that the TXOP initiated by the transmitter to the receiver needs to end before the NAV set on the 1^{st} primary channel equals to 0.

For the receiver, if the 1^{st} primary channel is busy for the NAV duration, the receiver may move to the 2^{nd} primary channel and wait for a BSRP frame or RTS (control frame) from the transmitter. Additionally, after moving to the 2^{nd} primary channel, the receiver needs to return to the 1^{st} primary channel before the NAV of the 1^{st} primary channel equals to 0.

Continuing with reference to FIG. 2, the transmitter is an AP, and the receiver is an STA. There are OBSS frame exchanges on S1.2 and S1.3, meaning S1.2 and S1.3 are busy. The AP and STA communicate on P1 and S1.1, transmitting a 40 MHz PPDU. Then, on P1 and S1.1, the AP and STA decode an OBSS packet or physical layer preamble and set the NAV. That is, P1 and S1.1 are busy. The AP accesses the secondary channels if medium idle for >X time duration. That is, the AP accesses P2 and S2.1. The AP and STA exchange BSRP, BSR, and 40 MHz PPDU on P2 and S2.1. The frame exchange between the AP and STA on the secondary channels ends before NAV = 0 on P1 (frame exchanges end before NAV = 0 on P1) to keep the medium sync on P1. Afterwards, the AP and STA can perform frame exchange on 80 MHz.

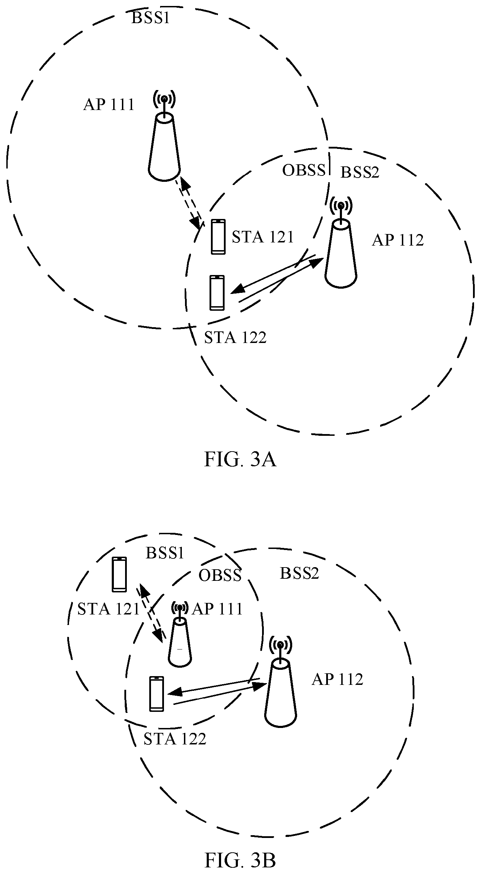

The transmitter and receiver may have different views of the channel state. For example, for the same channel, the transmitter may consider the channel busy, while the receiver may consider the channel idle. Or, for the same channel, the transmitter may consider the channel idle, while the receiver may consider the channel busy. This is illustrated below with examples in Figures 3A and 3B.

As shown in FIG. 3A, AP 111 and STA 121 belong to BSS1, and AP 112 and STA 122 belong to BSS2. BSS1 and BSS2 have an OBSS. STA 121 is within the OBSS, while AP 111 is outside the OBSS. If AP 112 and STA 122 are communicating on the first channel, STA 121 can detect the first channel as busy, while AP 111 detects the first channel as idle.

As shown in FIG. 3B, AP 111 and STA 121 belong to BSS1, and AP 112 and STA 122 belong to BSS2. BSS1 and BSS2 have an OBSS. AP 111 is within the OBSS, while STA 121 is outside the OBSS. If AP 112 and STA 122 are communicating on the first channel, AP 111 can detect the first channel as busy, while STA 121 detects the first channel as idle.

When the transmitter and receiver have different views of the channel state of a primary channel, the behavior of the transmitter and receiver can be as follows.

Case 1: The 1^{st} primary channel is busy from the transmitter side (indicated by NAV setting), but the 1^{st} primary channel is idle from the receiver side.

For Case 1, in some embodiments, the transmitter may send BSRP or RTS on the 2^{nd} primary channel and available auxiliary channels. The receiver may not monitor the 2^{nd} primary channel and may not respond to the BSRP/RTS.

For Case 1, in some embodiments, the receiver may send RTS on the 1^{st} primary channel. The transmitter may be monitoring the 2^{nd} primary channel but may not respond to the RTS on the 1^{st} primary channel.

Case 2: The 1^{st} primary channel is idle from the transmitter side, but the 1^{st} primary channel is busy from the receiver side (indicated by NAV setting).

For Case 2, in some embodiments, the transmitter may send BSRP or RTS on the 1^{st} primary channel and available auxiliary channels (excluding the 2^{nd} primary channel). The receiver may be waiting on the 2^{nd} primary channel and may not respond to the BSRP/RTS on the 1^{st} primary channel.

For Case 2, in some embodiments, the transmitter may send BSRP or RTS on the 1^{st} primary channel and available auxiliary channels (including the 2^{nd} primary channel). The receiver may be waiting on the 2^{nd} primary channel and may respond to the BSRP/RTS on the 2^{nd} primary channel.

For simplicity, when the 1^{st} primary channel is idle, frames on the 2^{nd} primary channel can be ignored to avoid decoding OBSS frames on the auxiliary channels, thereby avoiding primary channel blindness caused by decoding OBSS frames on the auxiliary channels. Additionally, frames on the 2^{nd} primary channel are decoded only when the 1^{st} primary channel is busy.

It can be seen that when the transmitter and receiver have different views of the channel state, the technical solution of "secondary channel access" described above may lead to a problem of inconsistency in the channels used by the transmitter and receiver.

### Non-primary channel utilization

For the situation where the transmitter and receiver have different views of the channel state described above, it can be resolved by the method described in this section.

The transmitter and receiver need to reach a consensus on the primary 20 MHz channel occupied by the OBSS and any other unavailable channels to achieve the use of the secondary channel. Exemplarily, consensus can be reached through the following two methods.

### Method 1: Implicit method

Taking the primary channel as an example, the transmitter and receiver expect to see the same OBSS on the primary 20 MHz channel and then switch to the next set of channels. A threshold can be set for the signal strength from the OBSS to increase the probability that both the transmitter and receiver see the OBSS. A similar process is used to determine whether other channels are busy/idle.

### Method 2: Explicit method

If a control link exists, the transmitter can indicate on the control link that the transmitter has detected an OBSS or other busy activity and is moving to the next set of channels. It should be noted that some OBSSs include identifier information within the preamble and/or MAC portion of the frame. Therefore, Method 2 is possible in a coordinated system.

### Dynamic subband operation (DSO)

Some wireless communication technologies (e.g., ultra-high reliability (UHR)) define a new dynamic subband operation method. This method allows an AP to dynamically indicate transmission or reception (Tx/Rx) opportunities on an auxiliary bandwidth to a non-AP STA.

It should be noted that this application does not limit the bandwidth combinations supported by the AP and non-AP STA. The bandwidth supported by the AP needs to be higher than the set of bandwidths supported by the non-AP STA. Below, an AP with 320 MHz and a non-AP STA with 160 MHz are used as an example for explanation.

Based on dynamic subband operation, a 320 MHz AP can dynamically indicate transmission or reception (Tx/Rx) opportunities on the auxiliary 160 MHz to a 160 MHz non-AP STA. This operation can be for downlink (DL) transmission within each dynamic allocation opportunity or trigger based uplink (UL) transmission.

It can be understood that dynamic subband operation enables the AP to utilize its auxiliary 160 MHz bandwidth in a dynamic manner on a per-TXOP basis each time it wins channel access.

Exemplarily, the AP can dynamically decide whether to allocate a non-AP STA on the primary 160 MHz or the auxiliary 160 MHz and which non-AP STAs to allocate in this way based on bandwidth availability, channel conditions, and quality of service (QoS) requirements.

Dynamic subband operation helps align the presence of narrower bandwidth non-AP STAs on the auxiliary 160 MHz channel with the availability of the auxiliary 160 MHz bandwidth.

Compared to high-efficiency (HE) selective subchannel transmission (SST), dynamic subband operation results in better resource utilization and system performance.

Performing dynamic subband operation can involve the AP sending an indication to a DSO-capable non-AP STA at the start of any 320 MHz bandwidth TXOP, requesting the non-AP STA to switch to the auxiliary 160 MHz for that TXOP, and then proceeding with frame exchange on the auxiliary 160 MHz.

The AP can send a "subband switching control frame" to the scheduled DSO non-AP STA to implement dynamic subband operation.

The subband switching control frame may be a special initial control frame (e.g., it may be a modified MU-RTS, BSRP, or a newly defined frame) that can indicate a switch to the auxiliary 160 MHz.

The subband switching control frame has sufficient padding to cover the subband switching delay (i.e., the delay required for the non-AP STA to switch from the primary 160 MHz to the auxiliary 160 MHz).

It should be noted that the subband switching delay depends on the non-AP STA implementation and is negotiated during DSO capability signaling.

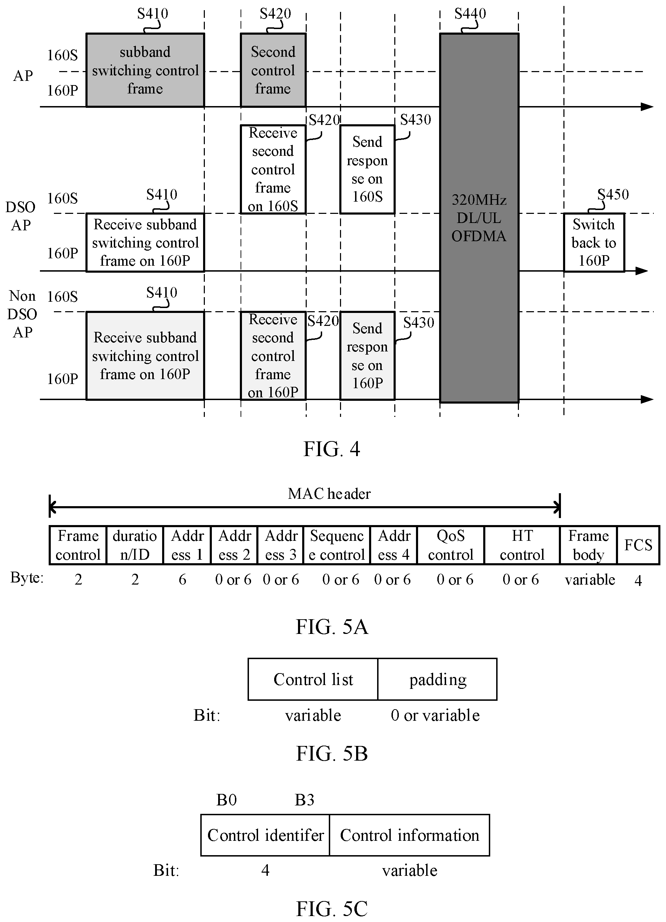

FIG. 4 is an example diagram of a dynamic subband operation process. The method shown in FIG. 4 may include steps S410 to S450.

Step S410: The AP sends a subband switching control frame on both the primary 160 MHz (denoted as 160P in FIG. 4) and the auxiliary 160 MHz (denoted as 160S in FIG. 4). DSO STAs and non-DSO STAs both receive the subband switching control frame on 160P. The subband switching control frame includes padding for DSO.

Step S420: The AP sends a second control frame on 160P and 160S. The DSO STA receives the second control frame on 160S. The non-DSO STA receives the second control frame on 160P.

Step S430: In response to step S420, the DSO STA sends a response on 160S; the non-DSO STA sends a response on 160P.

Step S440: The AP, DSO STA, and non-DSO STA perform uplink/downlink orthogonal frequency division multiple access (OFDMA) transmission on 320 MHz.

Step S450: The DSO STA switches back to 160P.

### A-control field

The A-control field can be a type of high throughput (HT) control field. To facilitate understanding of the A-control field, the HT control field is introduced first.

QoS data frames, QoS null frames, and management frames may all contain an HT control field. The presence of the HT control field is controlled by the +HTC subfield in the frame control field.

FIG. 5A is an example diagram of a MAC frame. FIG. 5A shows a possible position of the HT control field within the MAC frame. As shown in FIG. 5A, the HT control field is located within the MAC header. The MAC frame can also include one or more of the following fields: frame control, duration/ID, address 1, address 2, address 3, sequence control, address 4, QoS control, frame body, frame check sequence (FCS).

Table 1 shows an example format of the HT control field. As shown in Table 1, the A-control field can be the HT control field when both B0 and B1 are 1.

**Table 1**

| Variant | B0 | B1 | B2-B29 | B30 | B31 |
|---|---|---|---|---|---|
| HT | 0 | HT Control Middle | | AC Constraint | RGD / More PPDU |
| very high-throughput (VHT) | 1 | 0 | VHT Control Middle | AC Constraint | RGD/ More PPDU |
| high-efficiency (HE) | 1 | 1 | A-control | | |

FIG. 5B is an example diagram of the format of an A-control field. As shown in FIG. 5B, the A-control field may include one or more of the following fields: control list, padding.

The control list field can contain one or more control subfields. FIG. 5C is an example diagram of the format of a control subfield. As shown in FIG. 5C, the control subfield may include one or more of the following subfields: control identifier, control information. The control identifier subfield may indicate a specific type of A-control subfield. Table 2 exemplarily shows the values and meanings of the control identifier subfield.

**Table 2**

| Control Identifier Value | Meaning | Length of Control Information Subfield (bits) |
|---|---|---|
| 0 | triggered response scheduling (TRS) | 26 |
| 1 | operating mode (OM) | 12 |
| 2 | HE link adaptation (HLA) / EHT link adaptation (ELA) | 26 |
| 3 | buffer status report (BSR) | 26 |
| 4 | UL power headroom (UPH) | 8 |
| 5 | bandwidth query report (BQR) | 10 |
| 6 | command and status (CAS) | 8 |
| 7 | EHT operating mode (EHT OM) | 6 |
| 8 | single response scheduling (SRS) | 10 |
| 9 | AP assistance request (AAR) | 20 |
| 10-14 | Reserved | |
| 15 | ones need expansion surely (ONES) | 26 |

As described in the "Secondary Channel Access" section, related technologies handle the situation where the transmitter and the receiving set obtain different primary channel states through explicit or implicit methods. However, both methods have problems.

For the implicit method, this method can only increase the probability of seeing the same channel state, so reliability remains problematic. Additionally, an excessively low threshold may make it more difficult for a device to obtain the channel during channel contention, thereby affecting its data transmission rate and latency performance.

For the explicit method, channel state information is transmitted to indicate channel switching only when interference is detected on the primary channel. However, while the primary channel is being interfered with, the control link may also be interfered with, preventing the timely transmission of the channel state information.

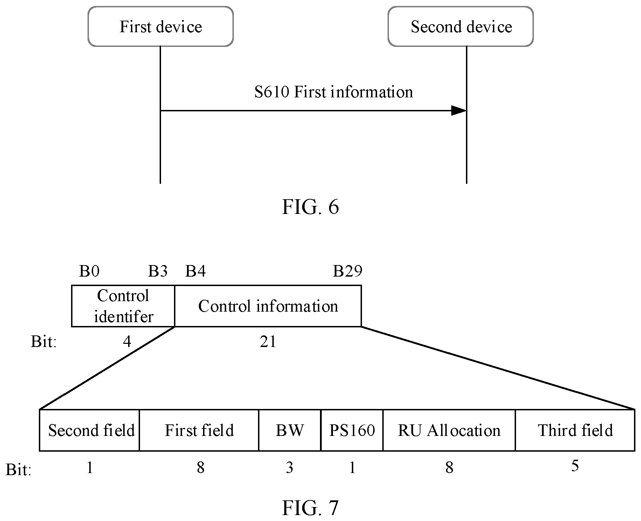

FIG. 6 is a schematic flowchart of a wireless communication method provided in an embodiment of the present application, aimed at solving the above problems.

The method shown in FIG. 6 may be executed by a first device and a second device. The first device may be a transmitter. For example, the first device may include an AP. The second device may be a receiver. For example, the second device may include a non-AP STA.

Both the first device and the second device may switch from a first channel to a second channel. The first channel may be a primary channel. The second channel may be a secondary channel. That is, the switching from the first channel to the second channel may be the secondary channel access procedure described above.

It should be noted that the first device switching from the first channel to the second channel may refer to: the first device performing random backoff on the second channel to obtain a TXOP. The second device switching from the first channel to the second channel may refer to: the second device monitoring the second channel, and/or responding to a frame transmitted on the second channel.

Exemplarily, the first channel may include one or more channels. For example, the first channel may include a 1^{st} primary channel. The second channel may include one or more channels. For example, the second channel may include a 2^{nd} primary channel.

The method shown in FIG. 6 may include step S610.

Step S610, the first device sends first information to the second device.

The first information may be used to indicate a rule for switching from the first channel to the second channel and/or a channel switching rule for switching back from the second channel to the first channel. It can be understood that before performing channel switching, the first device needs to transmit this first information so that the second device can determine whether to perform channel switching based on the channel switching rule. Taking the second channel being a secondary channel as an example, the first information can be used to indicate parameters related to the secondary channel. Based on the parameters related to the secondary channel, a secondary channel switching rule can be determined.

Based on the first information, the first device and the second device can reach an agreement on the channel switching rule. Based on this rule, even if the first device and the second device detect different channel states, they can synchronously and consistently perform switching from the first channel to the second channel.

In some embodiments, the first information may be used to indicate information of a first time period. The first time period is related to the behavior of the first device and/or the second device switching from the first channel to the second channel. For example, if the first device and the second device do not have effective frame interaction on the first channel within the first time period, both the first device and the second device may switch to the second channel.

In some embodiments, through the first information, the first device may indicate to the second device whether the first device will switch to the second channel after the first time period. In some embodiments, through the first information, the first device may indicate to the second device whether the second device is required to switch to the second channel after the first time period.

It can be understood that by indicating the first time period, the switching from the first channel to the second channel can be indicated in advance. That is, the first device and the second device can perform channel switching only after at least the first time period following the first information. Therefore, the first information can be sent in advance before the channel state becomes busy, thereby avoiding failure in sending indication information due to channel busyness.

In some embodiments, if the channel switching rule is satisfied within the first time period, the first device and/or the second device may switch from the first channel to the second channel. Exemplarily, the channel switching rule may include: the second device fails to send a response frame and/or the first device fails to receive a response frame sent by the second device. That is, the first time period may satisfy: if the second device fails to send a response frame in the first time period, the second device is required to switch from the first channel to the second channel; and/or, if the first device fails to receive a response frame sent by the second device in the first time period, the first device is required to switch from the first channel to the second channel.

It can be understood that the first time period may indicate a "maximum holding time". For the first device, if the first device fails to receive a response frame that should have been received, it can stay on the first channel for a maximum of the first time period. That is, if the first device has not received the response frame after the first time period expires, the first device is required to switch to the second channel. For the second device, if the second device fails to send a response frame that should have been sent, it can stay on the first channel for a maximum of the first time period. That is, if the second device has not sent the response frame after the first time period expires, the second device is required to switch to the second channel.

The information of the first time period may include one or more of the following: a start time of the first time period, a duration of the first time period, an end time of the first time period. Exemplarily, the start time of the first time period may be predefined, and the first information may indicate the duration of the first time period, so through the first information, the second device can determine the first time period.

In some embodiments, the start time of the first time period may be the end time of a response frame corresponding to the first information. In this case, if the second device has not sent the next response frame to the first device since the end time of the response frame of the current frame, the maximum time interval between the time when the second device starts switching to the second channel and the end time of the response frame of the current frame may be the first time period.

From this, it can be seen that even if neither the first device nor the second device detects interference, after the first time period ends, if the channel switching rule is satisfied, both devices need to switch to the second channel, thereby achieving synchronous channel switching by the first device and the second device even when there is a difference in channel state detection, thus avoiding transmission failures caused by inconsistent transmitting and receiving channels.

The information of the first time period may be carried in a first field. The first field may include a newly defined field. For example, the first field may be represented by a timeout field. The first field may include a field already defined in related technologies. That is, a field already defined in related technologies may also be used to indicate the information of the first time period. For example, the first field may include a duration field in a MAC frame header.

The present application does not limit the type of the first field. For example, the first field may be of an integer type.

The present application does not limit the unit of the first time period. For example, the first time period may be in unit of microsecond or millisecond.

The first information may be used to indicate whether the first device sends a second frame to the second device. Here, the second frame may be a frame requiring an immediate response. In the case where the first device sends the second frame, the first device and/or the second device may determine whether to switch from the first channel to the second channel based on the transmission and reception status of a response frame of the second frame.

Indication information of whether the first device sends the second frame to the second device may be carried in a second field. In some embodiments, the value of the second field may be used to indicate whether the first device sends the second frame. For example, when the value of the second field is 0, the first device will not send the second frame; and/or, when the value of the second field is 1, the first device will send the second frame. As another example, when the value of the second field is 1, the first device will not send the second frame; and/or, when the value of the second field is 0, the first device will send the second frame. In some embodiments, whether the first device sends the second frame to the second device may be indicated by the presence or absence of the second field. For example, when the second field is present, the first device will send the second frame to the second device; and/or, when the second field is absent, the first device will not send the second frame to the second device. As another example, when the second field is absent, the first device will send the second frame to the second device; and/or, when the second field is present, the first device will not send the second frame to the second device.

The second field may include a newly defined field. For example, the newly defined field may be called as a "UHR more frame (UMF)" field. The second field may include a field already defined in related technologies. That is, a field already defined in related technologies may also be used to indicate whether the first device sends the second frame to the second device.

In some embodiments, the first information may be carried in a first frame. The second frame may be the next frame to the first frame. That is, the first information may be used to indicate whether the first device sends the next frame to the current frame.

In the case where the second frame is the next frame to the first frame, the second field may be used to indicate whether the next frame exists. That is, the second field may indicate whether the first device will send the next frame to the same device (i.e., the second device) after the current frame.

The present application does not limit the type of the second field. For example, the second field may be of a Boolean type.

By indicating whether to send the second frame, interference that may occur after the transmission of the first frame ends can be handled. If the first device is to send the second frame, the second device can start determining whether the channel switching rule is satisfied, and further perform a channel switching operation based on whether the rule is satisfied, thereby avoiding interference; if the first device is not to send the second frame, the second device can skip determining whether the channel switching rule is satisfied, thereby avoiding unnecessary channel switching operations.

In the case where the first device is to send the second frame, the first device and/or the second device may determine whether to switch from the first channel to the second channel within the first time period. That is, through the second field, interference that may occur within the first time period can be handled.

In the case where the first information indicates that the first device sends the second frame to the second device, the first device must send the second frame to the second device before the end time of the first time period and reserve time for receiving a response frame of the second frame; after receiving the first information, the second device needs to start a timer with a duration of the first time period. The turn-on instant of the timer is at the end time of the response frame of the first frame.

In the case where the first device sends the second frame to the second device, if the second device fails to send a response frame to the second frame within the first time period, the second device is required to switch from the first channel to the second channel. In the case where the first device sends the second frame, if the first device fails to receive a response frame of the second frame within the first time period, the first device is required to switch from the first channel to the second channel.

As another example, in the case where the first information indicates that the first device fails to send the second frame to the second device, the first device may send the first frame based on related technologies. After receiving the first information, the second device may ignore other information indicated by the first information.

In some embodiments, the first information may include information of the second channel. That is, the first information may include information of the channel used by the first device and/or the second device after performing the channel switching operation. In the case where the second channel includes a secondary channel, the information of the second channel is the information of the target secondary channel. Here, the target secondary channel may refer to the channel used by the first device and/or the second device after performing the secondary channel switching operation.

Exemplarily, the information of the second channel may include one or more of the following: an operating bandwidth of the second channel, or a location of the second channel.

The operating bandwidth of the second channel may be 20MHz, 40MHz, 80MHz, 160MHz, 320MHz, or other values.

The location of the second channel may be used to indicate the location of the second channel within a 320MHz bandwidth. For example, the 320MHz channel may be divided into one or more of the following: 2 160MHz channels, 4 80MHz channels, 8 40MHz channels, or 16 20MHz channels. Here, the channels corresponding to the 2 160MHz channels can be referred to as a primary 160MHz channel and a secondary 160MHz channel. Based on the above division, the location of the second channel may include, for example, one or more of the following: which of the 2 160MHz channels the second channel is located in, which of the 4 80MHz channels the second channel is located in, which of the 8 40MHz channels the second channel is located in, or which of the 16 20MHz channels the second channel is located in.

In some embodiments, the information of the second channel may be indicated through multiple fields. The multiple fields may be combined to jointly indicate the information of the second channel.

Exemplarily, the multiple fields that jointly indicate the information of the second channel may include one or more of the following fields: bandwidth (BW), PS160, resource unit allocation (RU allocation). A detailed explanation is provided below.

In some embodiments, the BW field may indicate the operating bandwidth related to the channel indicated by the resource unit allocation field. The values and meanings of the BW field can be as shown in Table 3.

**Table 3**

| Value | Meaning |
|---|---|
| 0 | 20 MHz |
| 1 | 40 MHz |
| 2 | 80 MHz |
| 3 | 160 MHz |
| 4 | 320 MHz |
| 5, 6, 7 | Reserved |

It should be noted that part or all of the content in Table 3 may be implemented independently, and the present application does not limit this.

In some embodiments, the PS160 field may be used to indicate whether the channel indicated by the resource unit allocation field is located in the primary 160 MHz channel or the secondary 160 MHz channel. For example, a PS160 field value of 0 may indicate the primary 160MHz channel, and a value of 1 may indicate the secondary 160MHz channel. As another example, a PS160 field value of 1 may indicate the primary 160MHz channel, and a value of 0 may indicate the secondary 160MHz channel.

In some embodiments, the resource unit allocation field may be used together with the BW and PS160 fields to jointly indicate the information of the second channel. For example, when the bandwidth of the indicated channel is less than or equal to 80MHz, the B0 bit of the resource unit allocation field indicates whether the channel indicated by the B7-B1 bits of that field is located in the low 80MHz channel or the high 80MHz channel. As another example, when the bandwidth of the indicated channel is greater than 80MHz, the B0 value of the resource unit allocation field is 1. As another example, bits B7-B1 may indicate the specific location of a channel less than or equal to 80MHz. The specific manner in which the resource unit allocation field, PS160, and BW fields jointly indicate the second channel can be as shown in Table 4.

**Table 4**

| PS160 | B0 of resource unit allocation field | B7-B1 of resource unit allocation field | Bandwidth indicated by BW field (MHz) | Indicated channel |
|---|---|---|---|---|
| Values 0-3 respectively indicate the lowest 80MHz in 320MHz, the second lowest 80MHz in 320MHz, the third lowest 80MHz in 320MHz, and the fourth lowest 80MHz in 320MHz. | | 61 | 20,40,80,160,320 | Lowest 20MHz channel in the indicated 80MHz |
| | | 62 | 20, 40,80,160,320 | Second lowest 20MHz channel in the indicated 80MHz |
| | | 63 | 20, 40,80,160,320 | Third lowest 20MHz channel in |
| | | | | the indicated 80MHz |
| | | 64 | 20, 40,80,160,320 | Fourth lowest 20MHz channel in the indicated 80MHz |
| | | 65 | 40,80,160,320 | Lowest 40MHz channel in the indicated 80MHz |
| | | 66 | 40,80,160,320 | Second lowest 40MHz channel in the indicated 80MHz |
| | | 67 | 80,160,320 | 40MHz channel |
| 0 | 1 | 68 | 160,320 | Lowest 160MHz channel in the indicated 320MHz |
| 1 | 1 | 68 | 160,320 | Highest 160MHz channel in the indicated 320MHz |

In some embodiments, the first information may be used to indicate the behavior of the first device and/or the second device on the second channel. That is, the first information may indicate the channel switching behavior allowed to be performed by the first device and/or the second device after switching to the second channel. For example, the first information may be used to indicate under what conditions or at what time the first device and/or the second device switch back to the first channel.

Exemplarily, the first information may indicate information of a second time period. The second time period may be related to the behavior of the first device and/or the second device on the second channel. For example, if the second device fails to send a response frame in the second time period, the second device is required to switch back from the second channel to the first channel. As another example, if the first device fails to receive a response frame sent by the second device in the second time period, the first device is required to stop transmission on the second channel. That is, the second time period may be used to indicate: the maximum time interval between the end time of the current response frame and the time when the second device is required to automatically switch back to the first channel if the second device continuously fails to send a response frame to the first device after switching to the second channel.

It can be understood that the second time period may indicate another "maximum holding time". For the first device, on the second channel, the maximum duration for which the first device fails to receive a response frame that should have been received can be the second time period. That is, if the first device has not received the response frame after the second time period expires, the first device is required to stop transmission on the second channel, and/or switch back to the first channel. For the second device, on the second channel, the maximum duration for which the second device fails to send a response frame that should have been sent is the second time period. That is, if the second device has not sent the response frame after the second time period expires, the second device is required to switch back to the first channel.

The information of the second time period may include one or more of the following: a start time of the second time period, a duration of the second time period, or an end time of the second time period. Exemplarily, the start time of the second time period may be predefined, and the first information may indicate the duration of the second time period, so that through the first information, the second device can determine the second time period.

In some embodiments, the start time of the second time period may be the end time of a response frame corresponding to the first information. In this case, if the second device continuously fails to send a response frame to the first device after switching to the second channel, the maximum time interval between the time when the second device automatically switches back to the first channel and the end time of the response frame of the current frame may be the second time period.

The present application does not limit the unit of the second time period. The the second time period may be in unit of microsecond or millisecond.

The information of the second time period may be carried in a third field. In the case where the second channel is a secondary channel, the third field may also be referred to as a "target secondary channel maximum hold time field".

The present application does not limit the type of the third field. For example, the third field may be of an integer type.

It should be noted that the first time period and/or the second time period described above may not be configured via the first information, but maybe one or more of the following: specified by a protocol, pre-set, pre-configured, predefined.

In some embodiments, the first information may be carried in a fourth field. One or more of the first field, the second field, the third field, BW, PS160, and the resource unit allocation field described above may be subfields of the fourth field.

In some cases, the second field is the first field, the third field, or the fourth field. For example, as indicated above, whether the first device sends a second frame to the second device may be indicated by the presence or absence of the second field. Taking the second field being the fourth field as an example, whether the first device sends the second frame to the second device may be indicated by the presence or absence of the fourth field.

The fourth field may be an A-control field. That is, the first information may be carried in the A-control field. Exemplarily, a new variant type of the A-control field may be defined. The A-control field of this new variant type may be referred to as a ULA Control field.

FIG. 7 is an example diagram of a format of a ULA Control field provided by an embodiment of the present application. As shown in FIG. 7, the ULA Control field may include the following control identifier and control information field.

The control identifier may be used to indicate the variant type of the A-control. Exemplarily, the value of the field of the control identifier may be any integer between 10 and 14, to indicate that the variant type of this A-control is a ULA control variant type.

The control information field may carry a series of parameters related to channel switching (i.e., part or all of the first information).

It should be noted that the present application does not limit the present of subfields in the control information field or the order of the subfields. FIG. 7 is merely an example. The control information field may include part or all of the fields shown in FIG. 7, or may include other fields besides those shown in FIG. 7. The order of the subfields in the control information field in FIG. 7 may be adjusted.

As described above, the first information may be carried in a first frame. The first frame may include one or more of: a data frame, a management frame, or a control frame. For example, the first frame may include one or more of: a QoS data frame, a QoS Null frame, a MAC header of a management frame, an MU-RTS trigger frame, a BSRP trigger frame, an NFRP trigger frame, a BQRP trigger frame, or a newly defined control frame.

In some embodiments, if an interference signal is detected on the first channel, the duration for which the interference signal interferes with the first channel may be obtained. The first device and/or the second device may determine the time to switch back from the second channel to the first channel based on the duration for which the interference signal interferes with the first channel.

For example, the first device and/or the second device may switch back to the first channel at or before the end time of the duration for which the interference signal interferes with the first channel.

For another example, at or before the end time of the duration for which the interference signal interferes with the first channel, the first device may send fourth information to the second device. The fourth information may be used to indicate that the second device is about to switch from the second channel to the first channel.

Optionally, if the interference signal is a WiFi signal, the duration for which the interference signal interferes with the first channel may be determined via NAV information. For example, the duration for which the interference signal interferes with the first channel may be equal to the value of the NAV. Exemplarily, the interference signal may include an OBSS signal on the first channel. In a case where the OBSS signal is configured with a NAV, the duration for which the interference signal interferes with the first channel may be determined based on the NAV.

As described above, the interference signal on the first channel may be detected by the first device or by the second device. Further, the duration for which the interference signal interferes with the first channel may be detected by the first device or by the second device.

In a case where the duration for which the interference signal interferes with the first channel is detected by the second device, the second device may send third information to the first device. The third information may be used to indicate the duration for which the interference signal interferes with the first channel. Therefore, if the second device detects the duration for which the interference signal interferes with the first channel, it may indicate the duration to the first device, so that the first device can switch back to the first channel in time.

The present application does not limit the frame carrying the third information. For example, the frame carrying the third information may be a CTS frame or a BA frame.

In some embodiments, after the first device switches to the second channel, if the first device does not detect an interference signal on the first channel, the first device may occupy both the first channel and the second channel, thereby maintaining an existing TXOP on the first channel.

Exemplarily, the first device occupying both the first channel and the second channel may include: the first device may send an invalid data frame. The invalid data frame may, for example, use a non-existent starting association identifier (AID) or a non-existent receiver address (RA).

For ease of understanding, the present application is described in detail below through Embodiment 1 to Embodiment 5.

### Embodiment 1

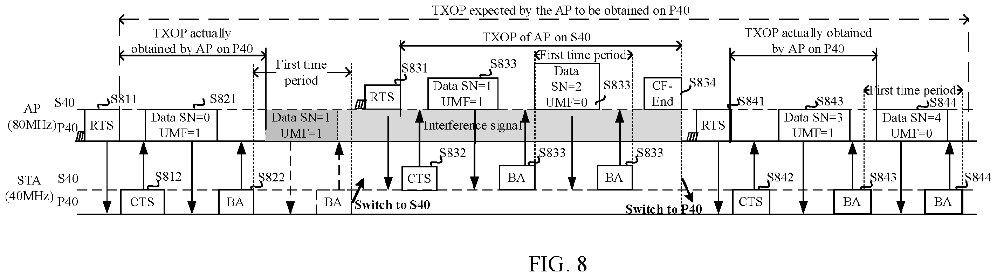

FIG. 8 is a schematic diagram of a communication process provided by Embodiment 1.

In FIG. 8, the first device is an AP, and the second device is an STA. The operating bandwidth of the AP is 80 MHz, where the primary 40 MHz channel is the P40 channel, and the secondary 40 MHz channel is the S40 channel. The operating bandwidth of the STA is 40 MHz, i.e., the P40 channel.

In Embodiment 1, the interference signal can only be detected by the AP, and cannot be detect by the STA. Furthermore, the interference signal is a WiFi signal.

The AP needs to send 5 high-reliability low-latency medium access control service data units (MSDUs) to the STA, using 5 data frames with SN=0 to SN=4 to transmit these 5 MSDUs. Since there may be OBSS interference or preemption signals on the P40 channel, to improve the reliability of transmitting these 5 data frames and reduce transmission delay, the AP may carry secondary channel related parameters in the data frame, thereby ensuring that when an interference signal occurs on P40, the AP and the STA can switch to S40 in a timely and synchronized manner to continue transmission.

The communication process shown in FIG. 8 includes steps S811 to S844.

Step S811: The AP sends an RTS frame to the STA on P40.

Step S812: The AP receives a CTS frame sent by the STA on P40.

Based on steps S811 and S812, the AP obtains a TXOP of a relatively long duration.

Step S821: The AP sends a data frame with SN=0 containing secondary channel related parameters to the STA.

In this data frame with SN=0, the UMF field is set to 1, indicating that at least one frame will be sent to the STA within a first time period interval and at least one response frame from the STA is expected to be received within the first time period interval; otherwise, transmission will be immediately switched to the secondary channel jointly indicated by BW, PS160, and the resource unit allocation field after the first time period. Here, BW=1 indicates that the bandwidth of the secondary channel is 40 MHz, PS160=0 and B0=0 of the resource unit allocation field indicate that the secondary channel is located in the lowest 80 MHz, i.e., the primary 80 MHz channel; B7-B1=66 of the resource unit allocation field indicates that the secondary channel is the higher 40 MHz channel in this 80 MHz, i.e., the S40 channel.

If the AP successfully sends the data frame in step S821, step S822 may be executed.

Step S822: The AP receives a BA response frame sent by the STA.

Within the first time period interval, because the AP detects OBSS interference or a preemption signal on P40, causing the AP to lose the remaining TXOP duration, the AP cannot send the data frame with SN=1 (indicated by a gray dashed box), and consequently the STA cannot send the BA response frame (indicated by a white dashed box). Therefore, the AP fails to receive a response frame from the STA within the first time period interval, and the STA fails to send any response frame to the AP. In this case, after the first time period interval ends, the AP may perform a random backoff on S40 to contend for the channel; and the STA may switch its operating channel from P40 to S40 and monitor the channel.

It can be seen that in step S811, the expected TXOP of AP on P40 is relatively long, but due to interference, the actual TXOP of AP on P40 is relatively short.

After the AP completes backoff on the S40 channel and the CCA indicates that the S40 channel is idle, the AP executes step S831, and the STA executes step S832.

Step S831: The AP sends an RTS frame to the STA.

Step S832: In response to step S831, the STA sends a CTS frame to the AP.

Through the RTS/CTS mechanism of steps S831 and S832, the AP obtains a TXOP on S40. The TXOP of AP on S40 is shown in FIG. 8.

Step S833: The AP continues to send data frames on the S40 channel and receives BA response frames sent by the STA. The data frames may include a data frame with SN=1 and a data frame with SN=2.

Both the AP and the STA switch to S40, which not only avoids the interference signal on P40 but also allows continued transmission of high-reliability low-latency data.

Additionally, the AP can obtain NAV information from the OBSS frame or preemption frame received on P40, i.e., the time that the P40 channel will be occupied by an interfering station or other stations. To maintain consistent busy/idle status across the entire 80 MHz channel, the AP needs to end its occupation of the S40 channel before the occupation of the P40 channel ends. Therefore, the AP may execute step S834.

Step S834: The AP sends a CF-End frame on the S40 channel before the interference signal ends.

The CF-End frame may be used to release the S40 channel. Additionally, the CF-End frame is also used to inform the STA to switch its operating channel from S40 back to P40.

Steps S841, S842: After the interference signal is cleared, the AP obtains a TXOP on P40 again through the RTS/CTS mechanism.

Step S843: The AP sends a data frame with SN=3 to the STA on the P40 channel and receives a BA response frame sent by the STA.

In step S843, because the STA sends the BA response frame, the AP receives the BA response frame. Therefore, the AP continues to send the next data frame on the P40 channel, and the STA continues to wait for the next data frame on the P40 channel.

Step S844: The AP sends a data frame with SN=4 to the STA on the P40 channel and receives a BA response frame sent by the STA.

Since the data frame with SN=4 carries the last high-reliability low-latency MSDU, the UMF field in the secondary channel related parameters carried therein may be set to 0, to instruct the STA to ignore the first time period and its associated channel switching rule.

### Embodiment 2

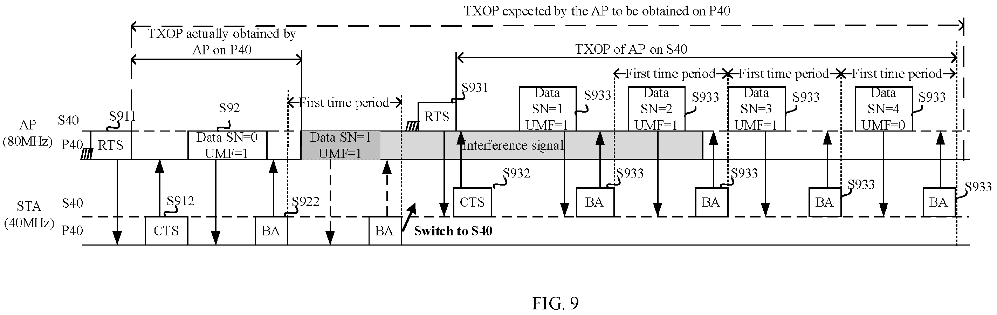

FIG. 9 is a schematic diagram of a communication process provided by Embodiment 2.

In FIG. 9, the first device is an AP, and the second device is an STA. The operating bandwidth of the AP is 80 MHz, where the primary 40 MHz channel is the P40 channel, and the secondary 40 MHz channel is the S40 channel. The operating bandwidth of the STA is 40 MHz, i.e., the P40 channel.

In Embodiment 2, the interference signal can only be detected by the AP, and cannot be detected by the STA. Here, the interference signal is a signal other than a WiFi signal. For example, the interference signal may include one or more of: microwave oven leakage radiation, a radar signal, or a NR-U signal.

The AP needs to send 5 high-reliability low-latency MSDUs to the STA, using 5 data frames with SN=0 to SN=4 to transmit these 5 MSDUs. Since there may be an interference signal on the P40 channel, to improve the reliability of transmitting these 5 data frames and reduce transmission delay, the AP may carry secondary channel related parameters in the data frame, thereby ensuring that when an interference signal appears on P40, the AP and the STA can switch to S40 in a timely and synchronized manner to continue transmission.

The communication process shown in FIG. 9 includes steps S911 to S933.

Step S911: The AP sends an RTS frame to the STA on P40.

Step S912: The AP receives a CTS frame sent by the STA on P40.

Based on steps S911 and S912, the AP obtains a TXOP of a relatively long duration.

Step S921: The AP sends a data frame with SN=0 containing secondary channel related parameters to the STA.

In this data frame with SN=0, the UMF field is set to 1, indicating that at least one frame will be sent to the STA within a first time period interval and at least one response frame from the STA is expected to be received within the first time period interval; otherwise, transmission will be immediately switched to the secondary channel jointly indicated by BW, PS160, and the resource unit allocation field after the first time period. Here, BW=1 indicates that the bandwidth of the secondary channel is 40 MHz, PS160=0 and B0=0 of the resource unit allocation field indicate that the secondary channel is located in the lowest 80 MHz, i.e., the primary 80 MHz channel; B7-B1=66 of the resource unit allocation field indicates that the secondary channel is the higher 40 MHz channel in this 80 MHz, i.e., the S40 channel.

If the AP successfully sends the data frame in step S921, step S922 may be executed.

Step S922: The AP receives a BA response frame sent by the STA.

Within the first time period interval, because the AP detects an interference signal on P40, causing the AP to lose the remaining TXOP duration, the AP cannot send the data frame with SN=1 (indicated by a gray dashed box), and consequently the STA cannot send the BA response frame (indicated by a white dashed box). Therefore, the AP fails to receive a response frame from the STA within the first time period interval, and the STA fails to send any response frame to the AP. In this case, after the first time period interval ends, the AP may perform a random backoff on S40 to contend for the channel; and the STA may switch its operating channel from P40 to S40 and monitor the channel.

It can be seen that in step S911, the expected TXOP of AP on P40 is relatively long, but due to interference, the actual TXOP of AP on P40 is relatively short.

After the AP completes backoff on the S40 channel and the CCA indicates that the S40 channel is idle, the AP executes step S931, and the STA executes step S932.

Step S931: The AP sends an RTS frame to the STA.

Step S932: In response to step S931, the STA sends a CTS frame to the AP.

Through the RTS/CTS mechanism of steps S931 and S932, the AP obtains a TXOP on S40. The TXOP of AP on S40 is shown in FIG. 9.

Step S933: The AP continues to send data frames on the S40 channel and receives BA response frames responded by the STA. The data frames may include: a data frame with SN=1, a data frame with SN=2, a data frame with SN=3, and a data frame with SN=4.

Both the AP and the STA switch to S40, which not only avoids the interference signal on P40 but also allows continued transmission of high-reliability low-latency data.

It should be noted that since the interference signal appearing on the P40 channel is not a WiFi signal, these signals do not carry the NAV information defined in the WiFi standard, so the AP cannot obtain the time information for which the P40 channel will be occupied from them. In this case, the AP does not need to release the S40 channel before the interference signal on P40 ends, but may continue using the S40 channel until the transmission of the data frame with SN=4 is completed.

### Embodiment 3

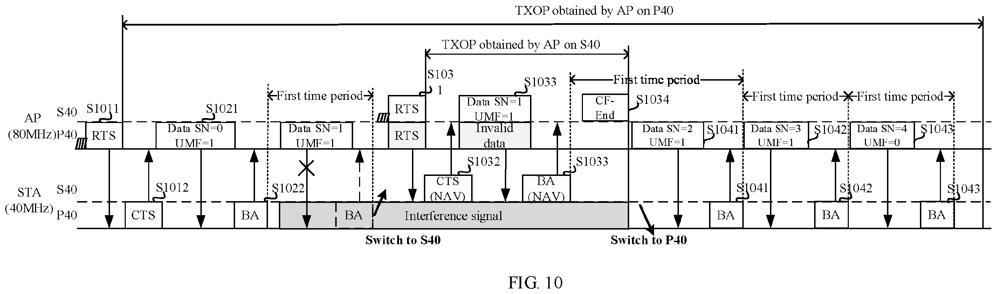

FIG. 10 is a schematic diagram of a communication process provided by Embodiment 3.

In FIG. 10, the first device is an AP, and the second device is an STA. The operating bandwidth of the AP is 80 MHz, where the primary 40 MHz channel is the P40 channel, and the secondary 40 MHz channel is the S40 channel. The operating bandwidth of the STA is 40 MHz, i.e., the P40 channel.

In Embodiment 3, the interference signal can only be detected by the STA, and cannot be detected by the AP. Furthermore, the interference signal is an OBSS interference signal.

The AP needs to send 5 high-reliability low-latency MSDUs to the STA, using 5 data frames with SN=0 to SN=4 to transmit these 5 MSDUs. Since there may be an interference signal on the P40 channel, to improve the reliability of transmitting these 5 data frames and reduce transmission delay, the AP may carry secondary channel related parameters in the data frame, thereby ensuring that when an interference signal appears on P40, the AP and the STA can switch to S40 in a timely and synchronized manner to continue transmission.

The communication process shown in FIG. 10 includes steps S1011 to S1043.

Step S1011, the AP sends an RTS frame to the STA on P40.

Step S1012, the AP receives a CTS frame sent by the STA on P40.

Based on step S1011 and step S1012, the AP obtains a TXOP of a relatively long duration.

Step S1021, the AP sends a data frame with SN=0 containing secondary channel related parameters to the STA.

In this data frame with SN=0, the UMF field is set to 1, indicating that at least one frame will be sent to the STA within a first time period interval and at least one response frame from the STA is expected to be received within the first time period interval; otherwise, transmission will immediately switch after the first time period to the secondary channel jointly indicated by BW, PS160, and the resource unit allocation field. Here, BW=1 indicates that the bandwidth of the secondary channel is 40MHz, PS160=0 and B0=0 of the resource unit allocation field indicate that the secondary channel is located in the lowest 80MHz, i.e., the primary 80MHz channel; B7-B1=66 of the resource unit allocation field indicates that the secondary channel is the higher 40MHz channel in this 80MHz, i.e., the S40 channel.

If the AP successfully sends the data frame in step S1021, step S1022 may be executed.

Step S1022, the AP receives a BA response frame sent by the STA.

Within the first time period interval, because the STA detects an interference signal on P40, the data frame with SN=1 sent by the AP cannot be received by the STA, and consequently the STA cannot send a BA response frame (indicated by a dashed box). Therefore, the AP fails to receive any response frame from the STA within the first time period interval, and the STA fails to send any response frame to the AP. In this case, after the first time period interval ends, the AP may perform a random backoff on S40 to contend for the channel; and the STA may switch the operating channel from P40 to S40 and monitor the channel.

After the AP completes backoff on the S40 channel and CCA indicates that the S40 channel is idle, the AP executes step S1031, and the STA executes step S1032.

Step S1031, the AP sends an RTS frame to the STA.

Since no interference signal is detected on P40 before or after the switch, the AP can send frames on both S40 and P40 simultaneously, thereby communicating with the STA on S40 while maintaining occupancy of P40 to avoid channel loss.

In step S1031, the AP can send the RTS frame on both P40 and S40.

Step S1032, in response to step S1031, the STA sends a CTS frame to the AP.

Through the RTS/CTS mechanism of step S1031 and step S1032, the AP obtains a TXOP on S40. The TXOP of the AP on S40 is shown in FIG. 10.

Step S1033, the AP continues to send the data frame with SN=1 on the S40 channel and receives the BA response frame responded by the STA.

The AP can adopt an OFDMA transmission mode to send the data frame with SN=1, i.e., sending an MU PPDU with an 80MHz bandwidth. The upper 40MHz RU carries the frame to be sent to the STA, and the lower 40MHz RU carries an invalid data frame.

Additionally, since the STA received an OBSS interference signal and obtained the OBSS NAV information therein before the switch, the STA can transmit the OBSS NAV information to the AP via a BA frame or a CTS frame on the S40 channel, to assist the AP in releasing the occupancy of the S40 channel before the OBSS interference signal ends.

Step S1034, the AP sends a CF-End frame on the S40 channel before the interference signal ends.

The CF-End frame can be used to release the S40 channel. Additionally, the CF-End frame is also used to inform the STA to switch the operating channel from S40 back to P40.

Step S1041, the AP sends a data frame with SN=2 to the STA on the P40 channel and receives a BA response frame sent by the STA.

In step S1041, because the STA sent a BA response frame, the AP receives the BA response frame. Therefore, the AP continues to send the next data frame on the P40 channel, and the STA continues to wait for the next data frame on the P40 channel.

Step S1042, the AP sends a data frame with SN=3 to the STA on the P40 channel and receives a BA response frame sent by the STA.

In step S1042, because the STA sent a BA response frame, the AP receives the BA response frame. Therefore, the AP continues to send the next data frame on the P40 channel, and the STA continues to wait for the next data frame on the P40 channel.

Step S1043, the AP sends a data frame with SN=4 to the STA on the P40 channel and receives a BA response frame sent by the STA.

Since the data frame with SN=4 carries the last high-reliability low-latency MSDU, the UMF field in the secondary channel related parameters carried therein can be set to 0, to instruct the STA to ignore the first time period and its associated channel switching rule.

### Embodiment 4

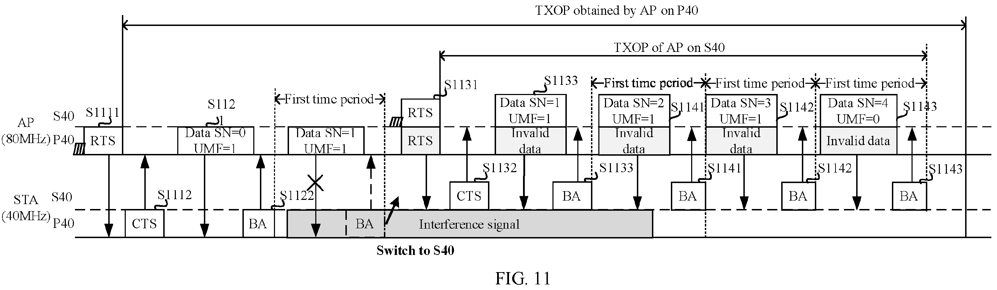

FIG. 11 is a schematic diagram of a communication process provided by Embodiment 4.

In FIG. 11, the first device is an AP, and the second device is an STA. The operating bandwidth of the AP is 80MHz, where the primary 40MHz channel is the P40 channel, and the secondary 40MHz channel is the S40 channel. The operating bandwidth of the STA is 40MHz, i.e., the P40 channel.

In Embodiment 4, the interference signal can only be detected by the STA, and cannot be detected by the AP. Furthermore, this interference signal is not a WiFi signal.

The AP needs to send 5 high-reliability low-latency MSDUs to the STA, using 5 data frames with SN=0 to SN=4 to transmit these 5 MSDUs respectively. Since there may be an interference signal on the P40 channel, to improve the reliability of transmitting these 5 data frames and reduce transmission delay, the AP can carry secondary channel related parameters in the data frames, thereby ensuring that when an interference signal appears on P40, the AP and the STA can promptly and synchronously switch to S40 to continue transmission.

The communication process shown in FIG. 11 includes steps S1111 to S1143.

Step S1111, the AP sends an RTS frame to the STA on P40.

Step S1112, the AP receives a CTS frame sent by the STA on P40.

Based on step S1111 and step S1112, the AP obtains a TXOP of a relatively long duration.

Step S1121, the AP sends a data frame with SN=0 containing secondary channel related parameters to the STA.

In this data frame with SN=0, the UMF field is set to 1, indicating that at least one frame will be sent to the STA within a first time period interval and at least one response frame from the STA is expected to be received within the first time period interval; otherwise, transmission will immediately switch after the first time period to the secondary channel jointly indicated by BW, PS160, and the resource unit allocation field. Here, BW=1 indicates that the bandwidth of the secondary channel is 40MHz, PS160=0 and B0=0 of the resource unit allocation field indicate that the secondary channel is located in the lowest 80MHz, i.e., the primary 80MHz channel; B7-B1=66 of the resource unit allocation field indicates that the secondary channel is the higher 40MHz channel in this 80MHz, i.e., the S40 channel.

If the AP successfully sends the data frame in step S1121, step S1122 may be executed.

Step S1122, the AP receives a BA response frame sent by the STA.

Within the first time period interval, because the STA detects an interference signal on P40, the data frame with SN=1 sent by the AP cannot be received by the STA, and consequently the STA cannot send a BA response frame (indicated by a dashed box). Therefore, the AP fails to receive any response frame from the STA within the first time period interval, and the STA fails to send any response frame to the AP. In this case, after the first time period interval ends, the AP may perform a random backoff on S40 to contend for the channel; and the STA may switch the operating channel from P40 to S40 and monitor the channel.

After the AP completes backoff on the S40 channel and CCA indicates that the S40 channel is idle, the AP and the STA execute step S1131 and step S1132.

Step S1131, the AP sends an RTS frame to the STA.

Since no interference signal is detected on P40 before or after the switch, the AP can send frames on both S40 and P40 simultaneously, thereby communicating with the STA on S40 while maintaining occupancy of P40 to avoid channel loss.

In step S1131, the AP may send the RTS frame on both P40 and S40.

Step S1132, in response to step S1131, the STA sends a CTS frame to the AP.

Through the RTS/CTS mechanism of step S1131 and step S1132, the AP obtains a TXOP on S40. The TXOP of the AP on S40 is shown in FIG. 11.

Step S1133, the AP continues to send the data frame with SN=1 on the S40 channel and receives the BA response frame responded by the STA.

Both the AP and the STA switch to S40, which not only avoids the interference signal on P40 but also allows continued transmission of high-reliability low-latency data.

The AP may adopt an OFDMA transmission mode, i.e., sending an MU PPDU with an 80MHz bandwidth. The upper 40MHz RU carries the frame to be sent to the STA, and the lower 40MHz RU carries an invalid data frame (e.g., using a non-existent AID or non-existent RA).

Additionally, since the interference signal does not carry NAV information, the STA cannot obtain the time information of the P40 channel being occupied, and thus cannot inform the AP about the NAV information. Therefore, the AP cannot release the S40 channel before the interference signal on P40 ends, so the AP can maintain the use of the S40 channel until the transmission of the data frame with SN=4 is completed.

Step S1141, the AP sends a data frame with SN=2 to the STA on the S40 channel, sends invalid data on the P40 channel, and receives a BA response frame sent by the STA.

In step S1141, because the STA sent a BA response frame, the AP receives the BA response frame. Therefore, the AP continues to send the next data frame on the P40 channel, and the STA continues to wait for the next data frame on the P40 channel.

Step S1142, the AP sends a data frame with SN=3 to the STA on the P40 channel, sends invalid data on the P40 channel, and receives a BA response frame sent by the STA.

In step S1142, because the STA sent a BA response frame, the AP receives the BA response frame. Therefore, the AP continues to send the next data frame on the P40 channel, and the STA continues to wait for the next data frame on the P40 channel.

Step S1143, the AP sends a data frame with SN=4 to the STA on the P40 channel, sends invalid data on the P40 channel, and receives a BA response frame sent by the STA.

Since the data frame with SN=4 carries the last high-reliability low-latency MSDU, the UMF field in the secondary channel related parameters carried therein can be set to 0, to instruct the STA to ignore the first time period and its associated channel switching rule.

### Embodiment 5

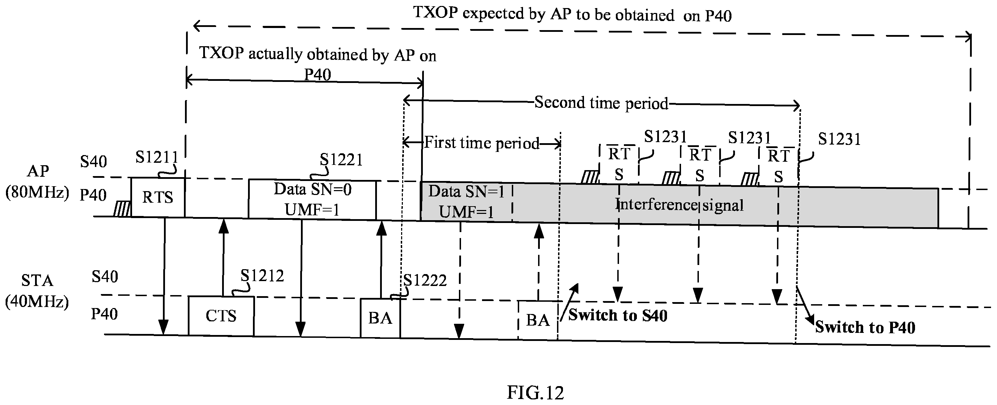

FIG. 12 is a schematic diagram of a communication process provided by Embodiment 5.

In FIG. 12, the first device is an AP, and the second device is an STA. The operating bandwidth of the AP is 80MHz, where the primary 40MHz channel is the P40 channel, and the secondary 40MHz channel is the S40 channel. The operating bandwidth of the STA is 40MHz, i.e., the P40 channel.

In Embodiment 5, the interference signal can only be detected by the AP, and cannot not be detected by the STA.

The AP needs to send 5 high-reliability low-latency MSDUs to the STA, using 5 data frames with SN=0 to SN=4 to transmit these 5 MSDUs respectively. Since there may be an interference signal on the P40 channel, to improve the reliability of transmitting these 5 data frames and reduce transmission delay, the AP can carry secondary channel related parameters in the data frames, thereby ensuring that when an interference signal appears on P40, the AP and the STA can promptly and synchronously switch to S40 to continue transmission.

The communication process shown in FIG. 12 includes steps S1211 to S1231.

Step S1211, the AP sends an RTS frame to the STA on P40.

Step S1212, the AP receives a CTS frame sent by the STA on P40.

Based on step S1211 and step S1212, the AP obtains a TXOP of a relatively long duration.

Step S1221, the AP sends a data frame with SN=0 containing secondary channel related parameters to the STA.

In this data frame with SN=0, the UMF field is set to 1, indicating that at least one frame will be sent to the STA within a first time period interval and at least one response frame from the STA is expected to be received within the first time period interval; otherwise, transmission will immediately switch after the first time period to the secondary channel jointly indicated by BW, PS160, and the resource unit allocation field. Here, BW=1 indicates that the bandwidth of the secondary channel is 40MHz, PS160=0 and B0=0 of the resource unit allocation field indicate that the secondary channel is located in the lowest 80MHz, i.e., the primary 80MHz channel; B7-B1=66 of the resource unit allocation field indicates that the secondary channel is the higher 40MHz channel in this 80MHz, i.e., the S40 channel.

If the AP successfully sends the data frame in step S1221, step S1222 may be executed.

Step S1222, the AP receives a BA response frame sent by the STA.

Within the first time period interval, because the AP detects an interference signal on P40, the AP cannot send the data frame with SN=1, and consequently the STA cannot send a BA response frame. Therefore, the AP fails to receive any response frame from the STA within the first time period interval, and the STA fails to send any response frame to the AP. In this case, after the first time period interval ends, the AP may perform a random backoff on S40 to contend for the channel; the STA may switch the operating channel from P40 to S40 and monitor the channel.

Step S1231, the AP sends an RTS on S40.

As shown in FIG. 12, the AP fails to send the RTS on S40 multiple times. This may be due to too many devices on S40. As can be seen from FIG. 12, the AP is unable to obtain a TXOP within the second time period, and thus has not received a response frame from the STA. In this case, the AP may stop sending on S40 after the second time period ends. At the same time, the STA may switch back from the S40 channel to the P40 channel and continue monitoring the P40 channel.

The method embodiments of the present application have been described in detail above, and the device embodiments of the present application are described in detail below. It should be understood that the description of the method embodiments and the description of the device embodiments correspond to each other, and therefore, parts not described in detail can be referred to the preceding method embodiments.

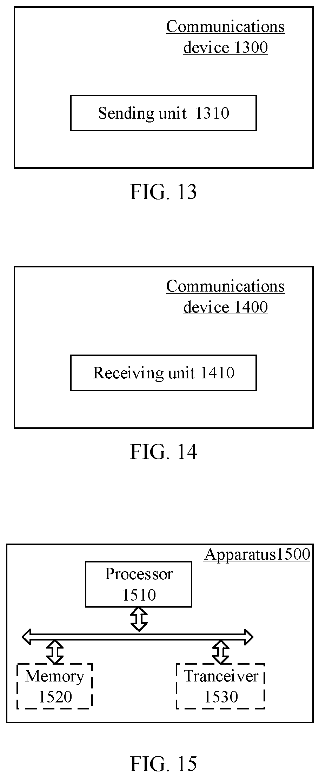

FIG. 13 is a schematic structural diagram of a communications device 1300 provided in an embodiment of the present application. The communications device 1300 may be a first device. The communications device 1300 may include a transmitting unit 1310.

The transmitting unit 1310 is configured to send first information to a second device; wherein the first information is used to indicate information of a first time period, and the first time period is related to a behavior of the first device and/or the second device switching from a first channel to a second channel.

In an optional embodiment, the transmitting unit 1310 may be a transceiver 1530. The communications device 1300 may also include a processor 1510 and a memory 1520, specifically as shown in FIG. 15.

FIG. 14 is a schematic structural diagram of a communications device 1400 provided in an embodiment of the present application. The communications device 1400 may be a second device. The communications device 1400 may include a receiving unit 1410.

The receiving unit 1410 is configured to receive first information sent by a first device; wherein the first information is used to indicate information of a first time period, and the first time period is related to a behavior of the first device and/or the second device switching from a first channel to a second channel.

In an optional embodiment, the receiving unit 1410 may be a transceiver 1530. The communications device 1400 may also include a processor 1510 and a memory 1520, specifically as shown in FIG. 15.

FIG. 15 is a schematic structural diagram of an apparatus for communication according to an embodiment of the present application. The dashed lines in FIG. 15 indicate that the unit or module is optional. The apparatus 1500 can be used to implement the methods described in the above method embodiments. The apparatus 1500 may be a chip or a communications device.

The apparatus 1500 may include one or more processors 1510. The processor 1510 may support the apparatus 1500 in implementing the methods described in the preceding method embodiments. The processor 1510 may be a general-purpose processor or a special-purpose processor. For example, the processor may be a central processing unit (CPU). Alternatively, the processor may be another general-purpose processor, digital signal processor (DSP), application specific integrated circuit (ASIC), field programmable gate array (FPGA) or another programmable logic device, discrete gate or transistor logic device, or discrete hardware component. A general-purpose processor may be a microprocessor or the processor may also be any conventional processor.

The apparatus 1500 may also include one or more memories 1520. A program is stored on the memory 1520, and the program is executable by the processor 1510, so that the processor 1510 executes the method described in the foregoing method embodiments. The memory 1520 may be independent of the processor 1510 or may be integrated in the processor 1510.

The apparatus 1500 may also include a transceiver 1530. The processor 1510 may communicate with another device or chip via the transceiver 1530. For example, the processor 1510 may transmit and receive data with another device or chip via the transceiver 1530.

Embodiments of the present application also provide a computer-readable storage medium for storing a program. The computer-readable storage medium may be applied to the communications device provided in the embodiments of the present application, and the program causes a computer to execute the methods executed by the communications device in the various embodiments of the present application.

Embodiments of the present application also provide a computer program product. The computer program product includes a program. The computer program product may be applied to the communications device provided in the embodiments of the present application, and the program causes a computer to execute the methods executed by the communications device in the various embodiments of the present application.

Embodiments of the present application also provide a computer program. The computer program may be applied to the communications device provided in the embodiments of the present application, and the computer program causes a computer to execute the methods executed by the communications device in the various embodiments of the present application.

It should be understood that the terms "system" and "network" in the present application may be used interchangeably. In addition, the terms used in the present application are only used to explain specific embodiments of the present application, and are not intended to limit the present application. The terms "first", "second", "third", and "fourth" in the specification and claims of the present application and the accompanying drawings are used to distinguish different objects, rather than to describe a specific order. Furthermore, the terms "including" and "comprising" and any variations thereof are intended to cover non-exclusive inclusion.

In the embodiments of the present application, a "field" may also be referred to as a "field", "subfield", or "sub-field". A field may occupy one or more bytes/octets, or a field may occupy one or more bits.

In the embodiments of the present application, the mentioned "indication" may be a direct indication, an indirect indication, or an indication of having an association relationship. For example, A indicates B, which may mean that A directly indicates B, for example, B can be obtained through A; it may also mean that A indirectly indicates B, for example, A indicates C, and B can be obtained through C; it may also mean that there is an association relationship between A and B.

In the embodiments of the present application, "B corresponding to A" means that B is associated with A, and B can be determined based on A. However, it should also be understood that determining B based on A does not mean determining B solely based on A, but may also determine B based on A and/or other information.

In the embodiments of the present application, the term "corresponding" may indicate a direct or indirect correspondence relationship between the two, may also indicate an association relationship between the two, or may indicate relationships such as indicating and being indicated, configuring and being configured.

In the embodiments of the present application, "pre-defined" or "pre-configuration" may be implemented by pre-storing corresponding codes, tables, or other information that can be used to indicate relevant information in a device (e.g., including AP and STA). The present application does not limit the specific implementation method. For example, pre-definition may refer to definition in a protocol.

The term "and/or" in the embodiments of the present application is merely a description of the association relationship of associated objects, indicating that three relationships may exist. For example, A and/or B may represent: A exists alone, both A and B exist, and B exists alone. In addition, the character "/" in this document generally indicates that the associated objects are in an "or" relationship.

In the embodiments of the present application, "including" may refer to direct inclusion or indirect inclusion. Optionally, "including" mentioned in the embodiments of the present application may be replaced with "indicating" or "used for determining". For example, A includes B, which may be replaced with A indicates B, or A is used for determining B.

In various embodiments of the present application, the sequence numbers of the above processes do not imply the order of execution. The execution order of each process should be determined by its function and internal logic, and should not constitute any limitation on the implementation process of the embodiments of the present application.

In the embodiments of the present application, the "protocol" may refer to a standard protocol in the communication field, for example, may include WiFi protocols and related protocols applied in future WiFi communication systems. The present application does not limit this.

In the several embodiments provided in the present application, it should be understood that the disclosed systems, apparatuses, and methods may be implemented in other ways. For example, the apparatus embodiments described above are merely illustrative. For example, the division of the units is only a logical functional division, and there may be other division methods in actual implementation. For example, multiple units or components may be combined or integrated into another system, or some features may be ignored or not executed. In another aspect, the mutual coupling or direct coupling or communication connection shown or discussed may be indirect coupling or communication connection through some interfaces, devices, or units, and may be in electrical, mechanical, or other forms.

The units described as separate components may or may not be physically separated. The components shown as units may or may not be physical units, that is, they may be located in one place or distributed over multiple network units. Some or all of the units may be selected according to actual needs to achieve the purpose of the solution of this embodiment.

In addition, each functional unit in each embodiment of the present application may be integrated into one processing unit, or each unit may exist physically separately, or two or more units may be integrated into one unit.

In the above embodiments, it may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed on a computer, the procedures or functions described in the embodiments of the present application are generated in whole or in part. The computer may be a general-purpose computer, a special-purpose computer, a computer network, or other programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center via wired (e.g., coaxial cable, optical fiber, digital subscriber line (DSL)) or wireless (e.g., infrared, wireless, microwave, etc.) means. The computer-readable storage medium may be any available medium that can be accessed by a computer or a data storage device such as a server or data center integrated with one or more available media. The available medium may be a magnetic medium (e.g., floppy disk, hard disk, magnetic tape), an optical medium (e.g., digital video disc (DVD)), or a semiconductor medium (e.g., solid state disk (SSD)), etc.

The above description is only specific implementations of the present application, but the protection scope of the present application is not limited thereto. Any person skilled in the art can easily think of changes or substitutions within the technical scope disclosed in the present application, which should be covered within the protection scope of the present application. Therefore, the protection scope of the present application should be subject to the protection scope of the claims.

## Claims

1. A wireless communication method, comprising:
sending, by a first device, first information to a second device;
wherein the first information is used to indicate information of a first time period, and the first time period is related to a behavior of the first device and/or the second device switching from a first channel to a second channel.

2. The method according to claim 1, wherein the first time period satisfies:
if the second device fails to send a response frame in the first time period, the second device is required to switch from the first channel to the second channel; and/or,
if the first device fails to receive a response frame sent by the second device in the first time period, the first device is required to switch from the first channel to the second channel.

3. The method according to claim 2, wherein the first information is carried in a first frame, the first information is also used to indicate whether the first device sends a second frame, the response frame is a response frame of the second frame, and in a case where the first device sends the second frame, the first device and/or the second device determines whether to switch from the first channel to the second channel based on a sending and receiving situation of the response frame in the first time period.

4. The method according to claim 3, wherein the second frame is a next frame to the first frame.

5. The method according to any one of claims 1 to 4, wherein the information of the first time period comprises a duration of the first time period.

6. The method according to any one of claims 1 to 5, wherein a start time of the first time period is an end time of a response frame corresponding to the first information.

7. The method according to any one of claims 1 to 6, wherein the first information also comprises information of the second channel.

8. The method according to claim 7, wherein the information of the second channel comprises one or more of following:
an operating bandwidth of the second channel; or
a location of the second channel.

9. The method according to claim 7 or 8, wherein the information of the second channel is indicated by a combination of a plurality of fields.

10. The method according to claim 9, wherein the plurality of fields comprise one or more of following fields: bandwidth, PS160, resource unit allocation field.

11. The method according to any one of claims 1 to 10, wherein the first information is also used to indicate information of a second time period, and the second time period is related to a behavior of the first device and/or the second device on the second channel.

12. The method according to claim 11, wherein the second time period satisfies:
if the second device fails to send a response frame in the second time period, the second device is required to switch back from the second channel to the first channel; and/or,
if the first device fails to receive a response frame sent by the second device in the second time period, the first device is required to stop sending on the second channel.

13. The method according to claim 11 or 12, wherein the information of the second time period comprises a duration of the second time period.

14. The method according to any one of claims 11 to 13, wherein a start time of the second time period is an end time of a response frame corresponding to the first information.

15. The method according to any one of claims 1 to 14, wherein the first channel is a 1^{st} primary channel, and the second channel is a 2^{nd} primary channel.

16. The method according to any one of claims 1 to 15, wherein the first information is carried in an A-control field.

17. The method according to any one of claims 1 to 16, wherein after the first device switches to the second channel, the method further comprises:
if the first device does not detect an interference signal on the first channel, the first device occupies both the first channel and the second channel.

18. The method according to any one of claims 1 to 17, further comprising:
receiving, by the first device, third information sent by the second device;
wherein the third information is used to indicate a duration for which an interference signal interferes with the first channel.

19. The method according to any one of claims 1 to 18, wherein at an end time of interference of an interference signal on the first channel and/or before the end time, the method further comprises:
switching, by the first device, from the second channel to the first channel; and/or,
sending, by the first device, fourth information to the second device, the fourth information being used to indicate that the second device is required to switch from the second channel to the first channel.

20. A wireless communication method, comprising:
receiving, by a second device, first information sent by a first device;
wherein the first information is used to indicate information of a first time period, and the first time period is related to a behavior of the first device and/or the second device switching from a first channel to a second channel.

21. The method according to claim 20, wherein the first time period satisfies:
if the second device fails to send a response frame in the first time period, the second device is required to switch from the first channel to the second channel; and/or,
if the first device fails to receive a response frame sent by the second device in the first time period, the first device is required to switch from the first channel to the second channel.

22. The method according to claim 21, wherein the first information is carried in a first frame, the first information is also used to indicate whether the first device sends a second frame, the response frame is a response frame of the second frame, and in a case where the first device sends the second frame, the first device and/or the second device determines whether to switch from the first channel to the second channel based on a sending and receiving situation of the response frame in the first time period.

23. The method according to claim 22, wherein the second frame is a next frame to the first frame.

24. The method according to any one of claims 20 to 23, wherein the information of the first time period comprises a duration of the first time period.

25. The method according to any one of claims 20 to 24, wherein a start time of the first time period is an end time of a response frame corresponding to the first information.

26. The method according to any one of claims 20 to 25, wherein the first information also comprises information of the second channel.

27. The method according to claim 26, wherein the information of the second channel comprises one or more of following:
an operating bandwidth of the second channel; or
a location of the second channel.

28. The method according to claim 26 or 27, wherein the information of the second channel is indicated by a combination of a plurality of fields.

29. The method according to claim 28, wherein the plurality of fields comprise one or more of following fields: bandwidth, PS160, resource unit allocation field.

30. The method according to any one of claims 20 to 29, wherein the first information is also used to indicate information of a second time period, and the second time period is related to a behavior of the first device and/or the second device on the second channel.

31. The method according to claim 30, wherein the second time period satisfies:
if the second device fails to send a response frame in the second time period, the second device is required to switch back from the second channel to the first channel; and/or,
if the first device fails to receive a response frame sent by the second device in the second time period, the first device is required to stop sending on the second channel.

32. The method according to claim 30 or 31, wherein the information of the second time period comprises a duration of the second time period.

33. The method according to any one of claims 30 to 32, wherein a start time of the second time period is an end time of a response frame corresponding to the first information.

34. The method according to any one of claims 20 to 33, wherein the first channel is a 1^{st} primary channel, and the second channel is a 2^{nd} primary channel.

35. The method according to any one of claims 20 to 34, wherein the first information is carried in an A-control field.

36. The method according to any one of claims 20 to 35, further comprising:
sending, by the second device, third information to the first device;
wherein the third information is used to indicate a duration for which an interference signal interferes with the first channel.

37. The method according to any one of claims 20 to 36, wherein at an end time of interference of an interference signal on the first channel and/or before the end time, the method further comprises:
switching, the second device, from the second channel to the first channel; and/or,
receiving, the second device, fourth information sent by the first device, the fourth information being used to indicate that the second device is required to switch from the second channel to the first channel.

38. A communications device, wherein the communications device is a first device, the communications device comprising:
a transmitting unit, configured to send first information to a second device;
wherein the first information is used to indicate information of a first time period, and the first time period is related to a behavior of the first device and/or the second device switching from a first channel to a second channel.

39. The device according to claim 38, wherein the first time period satisfies:
if the second device fails to send a response frame in the first time period, the second device is required to switch from the first channel to the second channel; and/or,
if the first device fails to receive a response frame sent by the second device in the first time period, the first device is required to switch from the first channel to the second channel.

40. The device according to claim 39, wherein the first information is carried in a first frame, the first information is further used to indicate whether the first device sends a second frame, the response frame is a response frame of the second frame, and when the first device sends the second frame, the first device and/or the second device determines whether to switch from the first channel to the second channel according to a reception and transmission condition of the response frame in the first time period.

41. The device according to claim 40, wherein the second frame is a next frame to the first frame.

42. The device according to any one of claims 38 to 41, wherein the information of the first time period comprises a duration of the first time period.

43. The device according to any one of claims 38 to 42, wherein a start time of the first time period is an end time of a response frame corresponding to the first information.

44. The device according to any one of claims 38 to 43, wherein the first information further comprises information of the second channel.

45. The device according to claim 44, wherein the information of the second channel comprises one or more of following:
an operating bandwidth of the second channel; or
a location of the second channel.

46. The device according to claim 44 or 45, wherein the information of the second channel is indicated by a combination of a plurality of fields.

47. The device according to claim 46, wherein the plurality of fields comprise one or more of following fields: bandwidth, PS160, resource unit allocation.

48. The device according to any one of claims 38 to 47, wherein the first information is further used to indicate information of a second time period, and the second time period is related to a behavior of the first device and/or the second device on the second channel.

49. The device according to claim 48, wherein the second time period satisfies:
if the second device fails to send a response frame in the second time period, the second device is required to switch back from the second channel to the first channel; and/or,
if the first device fails to receive a response frame sent by the second device in the second time period, the first device is required to stop sending on the second channel.

50. The device according to claim 48 or 49, wherein the information of the second time period comprises a duration of the second time period.

51. The device according to any one of claims 48 to 50, wherein a start time of the second time period is an end time of a response frame corresponding to the first information.

52. The device according to any one of claims 38 to 51, wherein the first channel is a 1^{st} primary channel, and the second channel is a 2^{nd} primary channel.

53. The device according to any one of claims 38 to 52, wherein the first information is carried in an A-control field.

54. The device according to any one of claims 38 to 53, wherein after the first device switches to the second channel, the device is further configured to:
if the first device does not detect an interference signal on the first channel, occupy both the first channel and the second channel.

55. The device according to any one of claims 38 to 54, wherein the device is further configured to:
receive third information sent by the second device;
wherein the third information is used to indicate a duration for which an interference signal interferes with the first channel.

56. The device according to any one of claims 38 to 55, wherein at an end time of interference of the first channel by an interference signal and/or before the end time, the device is further configured to:
switch from the second channel to the first channel; and/or,
send fourth information to the second device, the fourth information being used to indicate that the second device is required to switch from the second channel to the first channel.

57. A communications device, wherein the communications device is a second device, the communications device comprising:
a receiving unit, configured to receive first information sent by a first device;
wherein the first information is used to indicate information of a first time period, the first time period being related to a behavior of the first device and/or the second device switching from a first channel to a second channel.

58. The device according to claim 57, wherein the first time period satisfies:
if the second device fails to send a response frame in the first time period, the second device is required to switch from the first channel to the second channel; and/or,
if the first device fails to receive a response frame sent by the second device in the first time period, the first device is required to switch from the first channel to the second channel.

59. The device according to claim 58, wherein the first information is carried in a first frame, the first information is further used to indicate whether the first device sends a second frame, the response frame is a response frame of the second frame, and when the first device sends the second frame, the first device and/or the second device determines whether to switch from the first channel to the second channel according to a reception and transmission condition of the response frame in the first time period.

60. The device according to claim 59, wherein the second frame is a next frame to the first frame.

61. The device according to any one of claims 57 to 60, wherein the information of the first time period comprises a duration of the first time period.

62. The device according to any one of claims 57 to 61, wherein a start time of the first time period is an end time of a response frame corresponding to the first information.

63. The device according to any one of claims 57 to 62, wherein the first information further comprises information of the second channel.

64. The device according to claim 63, wherein the information of the second channel comprises one or more of following:
an operating bandwidth of the second channel; or
a location of the second channel.

65. The device according to claim 63 or 64, wherein the information of the second channel is indicated by a combination of a plurality of fields.

66. The device according to claim 65, wherein the plurality of fields comprise one or more of following fields: bandwidth, PS160, resource unit allocation.

67. The device according to any one of claims 57 to 66, wherein the first information is further used to indicate information of a second time period, the second time period being related to a behavior of the first device and/or the second device on the second channel.

68. The device according to claim 67, wherein the second time period satisfies:
if the second device fails to send a response frame in the second time period, the second device is required to switch back from the second channel to the first channel; and/or,
if the first device fails to receive a response frame sent by the second device in the second time period, the first device is required to stop sending on the second channel.

69. The device according to claim 67 or 68, wherein the information of the second time period comprises a duration of the second time period.

70. The device according to any one of claims 67 to 69, wherein a start time of the second time period is an end time of a response frame corresponding to the first information.

71. The device according to any one of claims 57 to 70, wherein the first channel is a 1^{st} primary channel, and the second channel is a 2^{nd} primary channel.

72. The device according to any one of claims 57 to 71, wherein the first information is carried in an A-control field.

73. The device according to any one of claims 57 to 72, wherein the device is further configured to:
send third information to the first device;
wherein the third information is used to indicate a duration for which an interference signal interferes with the first channel.

74. The device according to any one of claims 57 to 73, wherein at an end time of interference of the first channel by an interference signal and/or before the end time, the device is further configured to:
switch from the second channel to the first channel; and/or,
receive fourth information sent by the first device, the fourth information being used to indicate that the second device is required to switch from the second channel to the first channel.

75. A communications device, comprising a memory and a processor, the memory being used to store a program, the processor being used to call the program in the memory, to cause the communications device to execute the method according to any one of claims 1 to 37.

76. An apparatus, comprising a processor, used to call a program from a memory, to cause the apparatus to execute the method according to any one of claims 1 to 37.

77. A chip, comprising a processor, used to call a program from a memory, to cause a device installed with the chip to execute the method according to any one of claims 1 to 37.

78. A computer-readable storage medium, having a program stored thereon, the program causing a computer to execute the method according to any one of claims 1 to 37.

79. A computer program product, comprising a program, the program causing a computer to execute the method according to any one of claims 1 to 37.

80. A computer program, the computer program causing a computer to execute the method according to any one of claims 1 to 37.
